# EUROPÄISCHE PATENTSCHRIFT

(11) **EP 3 295 267 B1**
(45) Veröffentlichungstag und Bekanntmachung des Hinweises auf die Patenterteilung: **02.06.2021**
(21) Anmeldenummer: 16721634.0
(22) Anmeldetag: 26.04.2016
(51) Int. Cl.: G05D 1/02

(54) **BODENBEARBEITUNGSGERÄT UND VERFAHREN ZU DESSEN NAVIGATION SOWIE SCHWARM VON BODENBEARBEITUNGSGERÄTEN UND VERFAHREN ZU DEREN GEMEINSAMER NAVIGATION**
FLOOR TREATMENT DEVICE AND METHOD FOR THE NAVIGATION THEREOF, AND GROUP OF FLOOR TREATMENT DEVICES AND METHOD FOR THE JOINT NAVIGATION OF SAID FLOOR TREATMENT DEVICES
APPAREIL DE TRAITEMENT DE SOLS ET PROCÉDÉ POUR SA NAVIGATION AINSI QUE MULTITUDE D'APPAREILS DE TRAITEMENT DE SOLS ET PROCÉDÉ POUR LEUR NAVIGATION COMMUNE

(30) Priorität: 13.05.2015 DE 102015006014
(43) Veröffentlichungstag der Anmeldung: 21.03.2018
(73) Patentinhaber: Universität Bielefeld, 33615 Bielefeld (DE)
(72) Erfinder: HORST, Michael, 33613 Bielefeld (DE); MÖLLER, Ralf, 33615 Bielefeld (DE); PATZELT, Florian, 32257 Bünde (DE)
(74) Vertreter: Cohausz Hannig Borkowski Wißgott
(86) Internationale Anmeldenummer: PCT/EP2016/000662
(87) Internationale Veröffentlichungsnummer: WO 2016/180514

(56) Entgegenhaltungen:
- DE-A1-102012 112 036
- US-A1- 2007 027 612

## Beschreibung

Die Erfindung betrifft ein Verfahren zur Navigation wenigstens eines selbstfahrenden Bodenbearbeitungsgerätes, bevorzugt einer Vielzahl von Bodenbearbeitungsgeräten, die gleichzeitig einen Boden bearbeiten, d.h. zeitlich parallel, wobei die Antriebe eines jeweiligen Bodenbearbeitungsgerätes angesteuert werden in Abhängigkeit von Hindernisinformationen von durch das jeweilige Bodenbearbeitungsgerät detektierten Hindernissen, wobei Hindernisse zumindest gebildet werden durch reale Objekte, wie z.B. Wände, deren Hindernisinformationen durch Sensoren am jeweiligen Bodenbearbeitungsgerät erfasst werden, und wobei ein jeweiliges Bodenbearbeitungsgerät in zeitlichen und/oder räumlichen Abständen an Orten entlang der Bewegungsbahn mit einer mitgeführten Kamera Umgebungsbilder erfasst.

Eine Vielzahl von Bodenbearbeitungsgeräten, die zeitlich parallel arbeiten, kann so einen Schwarm von Bodenbearbeitungsgeräten ausbilden.

Die Erfindung betrifft weiterhin auch ein Bodenbearbeitungsgerät zur Durchführung des Verfahrens.

Das Dokument US 2007/0027612 A1 beschreibt ein Verfahren zum Koordinieren mehrerer Fahrzeuge in den Durchgängen in einer Mine. Grundsätzlich wird das Verfahren auch für Büroräume als anwendbar benannt. Auch DE 10 2012 112 036 A1 beschreibt ein selbstfahrendes Bodenbearbeitungsgerät und ein Verfahren zur Navigation.

Selbstfahrende Bodenbearbeitungsgeräte sind im Stand der Technik in vielfältiger Ausführung bekannt. Typische Vertreter solcher Bodenbearbeitungsgeräte sind Staubsaugroboter, Boden-Wischroboter oder Rasenmähroboter. Die Erfindung kann sich auf jeglichen Typ solcher Bodenbearbeitungsgeräte beziehen und bevorzugt auf Staubsaugroboter.

Die Bodenbearbeitungsgeräte weisen jeweils angesteuerte, insbesondere geregelte Antriebe auf, damit sich diese Bodenbearbeitungsgeräte selbsttätig über die jeweilige Bodenfläche bewegen können. Diese Antriebe umfassen typischerweise zwei unabhängig ansteuerbare Räder und eine frei drehbare Lenkrolle oder Kugel, wobei Kurvenfahrten durch Ansteuerung der Räder mit unterschiedlichen Drehgeschwindigkeiten erfolgen, insbesondere somit eine sogenannte differentielle Lenkung vorliegt. Die Ansteuerung erfolgt mit einer in einem Gerät integrierten Elektronik, welche die Navigation des Gerätes auf einer Bodenfläche übernimmt, z.B. in Abhängigkeit von Sensorsignalen oder berechneten Werten.

Typische Bodenbearbeitungsgeräte können dabei einen Gerätekörper mit z.B. kreisförmigem Grundriss aufweisen, wobei unterseitig, insbesondere zwischen den Rädern, eine Bodenbearbeitungsvorrichtung in den Gerätekörper integriert ist, z.B. eine Staubsaugvorrichtung oder eine rotierende Schneidvorrichtung.

Die angetriebenen Räder können Radsensoren aufweisen, um für die Navigation eines solchen Gerätes Odometrie-Daten bereitzustellen, also z.B. konkret zurückgelegte Wegstrecken.

Die sich bevorzugt nur in einer Ebene bewegenden Geräte weisen zur Hindernisdetektion im Rahmen der Navigation geeignete Sensoren auf, z.B. Kollisionssensoren, die auf Berührung reagieren oder bevorzugt berührungslos arbeitende Sensoren, z.B. ausgebildet als Laserscanner.

Hier ist es bekannt, einen in einer horizontalen Ebene rotierenden Laser einzusetzen, um winkelabhängig Abstandswerte zu Hindernissen zu erfassen, oder auch eine feste Anzahl von Laserstrahlen, die alle in einer bevorzugt gemeinsamen horizontalen Ebene vom Gerät ausgehen, um mit jedem dieser Strahlen unter dann festgelegten Winkeln relativ zur Bewegungsrichtung des Gerätes mehrere Abstandswerte zu einem jeweiligen Hindernis oder auch zu mehreren Hindernissen zu ermitteln.

In Abhängigkeit von derart sensorisch ermittelten Hindernisinformationen, die also bevorzugt durch mehrere Wertepaare von Winkeln und Abstand gegeben sind, kann ein Bodenbearbeitungsgerät bevorzugt kollisionsfrei navigieren, insbesondere eine erste Art der Navigation durchführen.

Im Stand der Technik ist es bekannt, in der steuernden Elektronik eines solchen Gerätes einen Navigationsalgorithmus zu implementieren, mit dem eine sogenannte Wandverfolgung an einer realen Wand z.B. eines Raumes oder die Verfolgung eines sonstigen realen Hindernisses erfolgen kann, was bevorzugt bedeutet, dass das Gerät in einem geregelten Abstand parallel zu einer Erstreckung des Hindernisses, wie einer Wand, entlangfährt. Weiterhin ist es bekannt, dass sich ein solches Gerät frei im Raum auf einer z.B. geraden Bahn bewegt, bis es auf ein Hindernis stößt und umkehrt.

Im bisherigen Stand der Technik ist die Art der gefahrenen Bewegungsbahn in der Elektronik vorgegeben implementiert, üblicherweise als Mäanderbahn oder als Spiralbahn. Bei einer vorgegebenen Mäanderbahn bedeutet dies, dass ein Bodenbearbeitungsgerät bei einem vor sich erkannten Hindernis seine Bewegungsrichtung umkehrt und in einem Abstand zu seiner eigenen zuvor gefahrenen Bahn zurückfährt. Dabei spielt es keine Rolle, ob die zuvor gefahrene Bahn an einer Wand entlang verlief oder frei im Raum entstanden ist.

Bei einem solchen Navigationsalgorithmus zum Fahren entlang von einem oder mehreren Hindernissen, der im Stand der Technik und dem Fachmann grundsätzlich hinlänglich bekannt ist, werden Wertepaare von Winkel (unter welchem das Gerät das Hindernis "sieht") und Abstand (unter diesem Winkel) z.B. vom Gerätemittelpunkt bis zum Hindernis an den Algorithmus übergeben, wobei der Algorithmus sodann einen Abstandswert zum Hindernis quer, bevorzugt senkrecht zur Bewegungsrichtung berechnet, sofern er sich nicht sensorisch ebenso ergibt, und durch Steuerung der Antriebe der Räder auf einen Sollwert regelt.

Im Stand der Technik ist es auch bekannt, eine Navigation durch sogenanntes lokales visuelles Homing durchzuführen. Lokales visuelles Homing ist eine Bezeichnung für eine Gruppe von Verfahren bei denen aus zwei Bildern, die an verschiedenen Orten aufgenommen wurden, ein Vektor, der sogenannte Home-Vektor berechnet wird, der von dem Ort, an dem eines der Bilder aufgenommen wurde, die Richtung zum Ort angibt, an dem das andere Bild aufgenommen wurde. Der Abstand zwischen beiden Orten wird nicht berechnet.

Bei Vorliegen mehrerer, z.B. einer Vielzahl von Bildern, kann durch Triangulation anhand von wenigstens zwei Home-Vektoren unter Verwendung bekannter Abstände zwischen den Orten eine Bestimmung eines Abstandes des Gerätes, z.B. zu einer Bahn, erfolgen, entlang der das Bodenbearbeitungsgerät bereits gefahren ist und entlang der es selbst mehrere Bilder aufgenommen hat.

Es besteht so die Möglichkeit eine Navigation auch anhand von Umgebungsbildern vorzunehmen, die an Orten aufgenommen wurden, an denen ein Bearbeitungsgerät schon einmal war. Unterschiedliche Arten, ein lokales visuelles Homing durchzuführen, sind im Stand der Technik und dem Fachmann ebenso hinlänglich bekannt.

Im Dokument DE 10 2007 016 802 B3 wird z.B. beschrieben, wie ein Bodenbearbeitungsgerät anhand von Umgebungsbildern, die auf seiner eigenen mäanderförmig oder spiralig vorgegebenen Bewegungsbahn aufgenommen wurden, und dem Verfahren des lokalen visuellen Homing durch Triangulation anhand von berechneten Home-Vektoren eine Abstandsregelung zu seiner eigenen Vorgängerbahn durchführt.

Da das Homing-Verfahren mit den vom Gerät selbst aufgenommenen Umgebungsbildern erfolgt und das Gerät eine vorgegebene, hier mäanderförmige Bahn fährt, ist es dem Gerät bekannt, welche der Umgebungsbilder es jeweils für die Triangulation und Abstandsregelung auf seinem neuen Bahnabschnitt zu verwenden hat, denn bei einer Richtungsumkehr fährt das Gerät an den Orten in umgekehrter Reihenfolge vorbei, an denen es auf der vorhergehenden Bahn Umgebungsbilder aufgenommen hat. Die Auswahl der heranzuziehenden Bilder erfolgt hier anhand von absoluten metrischen Informationen, über welche auf die benötigten Bilder zugegriffen wird.

Das Vorgeben der z.B. mäanderförmigen Bahn erfolgt im Stand der Technik dadurch, dass ein Punkt auf der zu fahrenden Bahn bestimmt wird, den das Bodenbearbeitungsgerät von seinem aktuellen Ort aus anfahren soll und das Bodenbearbeitungsgerät entsprechend gesteuert wird, um den Punkt zu erreichen. Um den Punkt festzulegen ist es nötig, die Art der zu fahrenden Bahn in der Elektronik des Gerätes abgelegt zu haben. Jeder anzufahrende Punkt muss dem Kriterium genügen, auf der vorgegebenen Bahn zu liegen. So setzt sich eine Bahn aus einer Vielzahl von Vorgabepunkten zusammen, die nacheinander angefahren werden.

Auf diese Weise kann eine z.B. mäanderförmige Navigation in jeweils parallelen vorgegebenen Bahnen, z.B. ausgehend von einer Bahn parallel zu einem Wandhindernis erfolgen, selbst wenn durch die Abstandsensoren das ursprünglichen Wandhindernis wegen zu großer Entfernung nicht mehr "gesehen" wird, oder auch ausgehend von einer frei im Raum liegenden Bahn erfolgen.

Aus diesem Grund werden häufig die sensorbasierte Navigation anhand von Hindernisinformationen (Winkel, Abstand) und lokales visuelles Homing in Bodenbearbeitungsgeräten kombiniert. Die Navigation um Hindernisse herum setzt dabei im Stand der Technik kurzzeitig die ansonsten vorherrschende Bahnvorgabe außer Kraft.

Sowohl bei der weiterhin hier beschriebenen Erfindung als auch im Stand der Technik wird zum Zweck der Navigation durch lokales visuelles Homing bevorzugt auf Umgebungsbilder zurückgegriffen, die ein 360°-Panorama der Umgebung des Ortes darstellen, an dem das Umgebungsbild aufgenommen wird. Dafür kann z.B. die vertikal ausgerichtete optische Achse einer Kamera auf den Mittelpunkt eines hyperbolischen Spiegels ausgerichtet sein, so dass im Kamerabild ein horizontales 360°-Panoramabild erfasst wird.

Im Stand der Technik, insbesondere bei dem vorzitierten Stand der Technik, wird es als nachteilig angesehen, dass eine Homing-basierte Navigation nur mit akzeptabler Rechenkapazität der Bodenbearbeitungsgeräte erfolgen kann, wenn die zu navigierende Bahn, wie oben beschrieben, vorbekannt ist und sich insofern aus der Bekanntheit ergibt, welche Umgebungsbilder von vorherigen Bahnpunkten für das durchzuführende lokale visuelle Homing heranzuziehen sind. Beliebige Bahnformen können demnach im Stand der Technik nicht erschlossen werden.

Auch setzt das bekannte Vorgehen dieses Standes der Technik voraus, dass das Bodenbearbeitungsgerät an seiner eigenen zuvor gefahrenen Bahn vorbeifährt, da ansonsten keine Umgebungsbilder identifiziert werden können, anhand derer ein Homing durchgeführt werden kann.

Bei einem Einsatz von ggfs. mehreren Bodenbearbeitungsgeräten auf derselben Bodenfläche würde es somit oft zur Mehrfachbearbeitung derselben Flächenbereiche durch unterschiedliche Bodenbearbeitungsgeräte kommen, was unnötigen Aufwand verursacht.

Vor diesem Hintergrund ist es eine Aufgabe der Erfindung, ein Navigationsverfahren zu erschließen, mit dem beliebige Bahnen der Bewegung eines Bodenbearbeitungsgerätes möglich sind, bevorzugt ein solches Verfahren geschaffen wird, bei dem für die Durchführung eines lokalen visuellen Homing eines Bodenbearbeitungsgerätes nicht auf durch die Bahn vorbestimmte Umgebungsbilder desselben Bodenbearbeitungsgerätes zurückgegriffen werden muss, sondern beliebige Bilder in der näheren Umgebung des Bodenbearbeitungsgerätes herangezogen werden können, unabhängig davon, welchen Ursprungs diese Umgebungsbilder sind.

Insbesondere ist es eine Aufgabe der Erfindung, ein Verfahren zu erschließen, bei dem eine Bodenfläche auch durch mehrere Bodenbearbeitungsgeräte zeitlich parallel bearbeitet werden kann, ohne dass es zu Mehrfachbearbeitungen eines oder mehrerer Flächenbereiche kommt.

Erfindungsgemäß wird diese Aufgabe dadurch gelöst, dass gemäß einem ersten Aspekt der Erfindung in einer Datenbank eine topologische Karte gebildet wird, in die von einem jeweiligen Bodenbearbeitungsgerät für jeden Ort, an dem ein Umgebungsbild, bevorzugt ein 360°-Panoramabild erfasst wird, ein Knoten eingefügt wird, dem zumindest das Umgebungsbild zugeordnet wird, und zwischen einem neu eingefügten Knoten und wenigstens einem in der Karte bestehenden, von demselben Bodenbearbeitungsgerät schon eingefügten Knoten Verbindungen gebildet werden, denen relative metrische Informationen zugeordnet werden.

Gemäß diesem Aspekt wird erfindungsgemäß eine bevorzugt rein topologische Karte aufgebaut, anhand derer die Navigation zusätzlich zur Navigation mittels Hindernissensoren durchgeführt werden kann, insbesondere auch hier auf der Basis von lokalem visuellen Homing.

Im Sinne der Erfindung wird unter einer rein topologischen Karte ein Graph im mathematischen Sinne verstanden, in welchem die Knoten Orte im Raum anhand von dort aufgezeichneten Sensordaten, hier zumindest das Panorama-Kamerabild charakterisieren, wobei Verbindungen, auch als Kanten bezeichnet, zwischen den Knoten eine wechselseitige Erreichbarkeit anzeigen. In solchen Verbindungen werden hier relative metrische Informationen über die relative Lage der Orte z.B. aus Odometriedaten gespeichert.

Jeder Knoten der erfindungsgemäß aufzubauenden oder aufgebauten Karte repräsentiert demnach durch das zugeordnete Umgebungsbild einen Ort, an dem ein Bodenbearbeitungsgerät einmal war, ohne den Ort mit absoluten Koordinaten zu versehen. Verbindungen zwischen Knoten bedeuten eine Erreichbarkeit zwischen den Orten, die von den Knoten repräsentiert werden. Solche Verbindungen gibt es somit zumindest zwischen den Knoten, die für solche Orte in die Karte eingefügt werden, entlang denen ein jeweiliges Bodenbearbeitungsgerät gefahren ist.

Die den Verbindungen zugeordneten relativen metrischen Informationen können bevorzugt durch die odometrischen Daten gebildet werden, die z.B. durch die Radsensoren des jeweiligen Bodenbearbeitungsgerätes erfasst werden, welches den Eintrag eines Knotens in die Karte veranlasst oder selbst vornimmt.

Die Berücksichtigung lediglich relativer metrischer Informationen, insbesondere relativer Positionsinformationen und der Verzicht auf absolute Positionsinformationen ist hier ein entscheidender Vorteil der topologischen Karte, besonders, wenn mehrere Bodenbearbeitungsgeräte gemeinsam eine solche topologische Karte aufbauen, da sich die Bodenbearbeitungsgeräte nicht auf ein gemeinsames Koordinatensystem einigen müssen. Für die Durchführung des erfindungsgemäßen Verfahrens existiert somit kein absolutes externes bzw. "globales" Koordinatensystem, insbesondere für mehrere Bodenbearbeitungsgeräte kein gemeinsames Koordinatensystem.

Für den erfindungsgemäßen Aufbau der topologischen Karte ist es dabei gänzlichst irrelevant, ob das Verfahren nur mit einem einzigen Bodenbearbeitungsgerät durchgeführt wird oder durch mehrere gleichzeitig. Jedes am Verfahren teilnehmende Bodenbearbeitungsgerät - also ggfs. auch nur eines - trägt Knoten in die Karte ein, für jeden Ort, an dem es Umgebungsbilder aufgenommen hat.

Gemäß einem weiteren wesentlichen Aspekt der Erfindung wird, nachdem ein Bodenbearbeitungsgerät einen Knoten in die Karte eingetragen hat und das Umgebungsbild zugeordnet ist, durch Vergleich des neuen Umgebungsbildes am aktuellen Ort mit allen in der Datenbank schon zu Knoten zugeordneten Umgebungsbildern ermittelt, ob in einer begrenzten (räumlichen) Umgebung des zum neuen Umgebungsbild gehörenden aktuellen Orts sich wenigstens ein Nachbarort befindet, zu dem bereits ein Knoten und ein zugeordnetes Umgebungsbild in der Karte von demselben oder einem anderen Bodenbearbeitungsgerät gespeichert wurde.

Die vorbenannte Ermittlung von Nachbarorten ist auf solche Orte beschränkt, die sich in einer festgelegten räumlichen Umgebung befinden, wobei die Umgebung nicht durch metrische räumliche Daten festgelegt sein muss. Vielmehr kann es vorgesehen sein, dass beim Bildvergleich ein bildliches (d.h. nicht räumliches) Abstandmaß zwischen aktuellem Umgebungsbild und allen schon gespeicherten ermittelt wird und ein Ort nur dann als Nachbarort gewertet wird, wenn das bildliche Abstandsmaß einen Schwellwert unterschreitet. Dem liegt die Überlegung zugrunde, dass mit abnehmendem räumlichen Abstand der Orte auch das bildliche Abstandsmaß der zugehörigen Umgebungsbilder abnimmt, demnach also Umgebungsbilder, die zum aktuellen Umgebungsbild das vorgegebene Abstandsmaß unterschreiten, zu Orten gehören, die einen bestimmten räumlichen - wenn auch nicht numerisch festgelegten - Abstand unterschreiten.

Der wesentliche Vorteil dieses Verfahrensaspektes ist es, dass unabhängig von jeglicher Bahnform durch den Vergleich ermittelt werden kann, ob ein Bodenbearbeitungsgerät in der Nähe eines Ortes oder mehrerer Orte ist, der oder die schon bearbeitet wurde/n und zwar ebenso unabhängig davon, ob diese Bearbeitung durch das Bodenbearbeitungsgerät selbst (welches das aktuelle Umgebungsbild lieferte) oder durch ein anderes zeitlich parallel arbeitendes Bodenbearbeitungsgerät in die Datenbank bzw. die topologische Karte eingetragen wurde. Da der Vergleich für jedes neu zu einem Knoten zugeordnete Umgebungsbild und für alle Bestandsbilder durchgeführt wird, können demnach auch mehrere Nachbarorte gefunden werden, die das Vergleichskriterium erfüllen, also einen Nachbarort in begrenzter Umgebung bilden.

Die Erfindung sieht nun vor, dass bei Vorhandensein wenigstens eines solchen durch Vergleich gefundenen Nachbarortes ausgehend vom neu eingefügten Knoten zu dem zugehörigen Knoten jedes ermittelten Nachbarortes in der topologischen Karte eine neue Verbindung eingefügt wird, wodurch die topologische Karte durch Erreichbarkeitsinformationen zwischen den Orten ergänzt wird.

Ein weiterer wesentlicher Aspekt der Erfindung ist es, dass zu wenigstens einem, bevorzugt allen Nachbarorten zu deren Knoten neue Verbindungen in die Karte eingefügt wurden, Hindernisinformationen relativ zum aktuellen Ort des neuen Umgebungsbildes aus den in der Karte gespeicherten Daten berechnet, in Form relativer metrischer Beziehungen in den Verbindungen eingetragen und zur Steuerung oder Regelung der Antriebe des jeweiligen Bodenbearbeitungsgerätes herangezogen werden. Diese Hindernisinformationen können auch hier wiederum Werte von Winkel und Abstand, berechnet durch lokales visuelles Homing, sein zwischen dem aktuellen Ort und jedem der vorangehend durch Vergleich gefundenen Nachbarorte.

Für die Erfindung bedeutet dies, dass in bevorzugter Ausführung ein jeder durch Vergleich gefundene Nachbarort bei der Navigation wie ein Hindernis, nämlich wie ein virtuelles Hindernis gewertet werden kann, welches durch einen Winkelwert und einen Abstandswert relativ zum aktuellen Ort charakterisiert ist, so als wäre das Hindernis sensorisch ausgemessen worden, wie es bei realen Hindernissen z.B. mittels Hindernissensoren, z.B. Laser erfolgt, was eingangs beschrieben wurde.

Erfindungsgemäß kann es dabei vorgesehen sein, dass an einen Navigationsalgorithmus, wie er in seiner Art zur eingangs beschriebenen realen Wandverfolgung bekannt ist, Wertepaare von Winkel und Abstand übergeben werden und dieser Algorithmus in Abhängigkeit dieser Werte die Antriebe bzw. Räder des jeweiligen Bodenbearbeitungsgerätes ansteuert, insbesondere auf einen bestimmten Abstand zum virtuellen Hindernis regelt. Erfindungsgemäß kann es sogar vorgesehen sein, dass exakt an denselben Navigationsalgorithmus die Wertepaare von Winkel und Abstand als Steuergröße übergeben werden, der auch die Navigation für reale Hindernisse vornimmt. Die Navigation bzw. der dafür hinterlegte Algorithmus unterscheidet demnach nicht zwischen den Hinderniswerten von realen oder virtuellen Hindernissen.

Gemäß dieser im Stand der Technik grundsätzlich bekannten Navigationsart werden somit die erfindungsgemäß ermittelten virtuellen Hindernisse so behandelt, als seien es reale Hindernisse, mit dem Effekt, dass Bodenbereiche, die von einem beliebigen Bodenbearbeitungsgerät bereits bearbeitet wurden, als virtuelles Hindernis von jedem Bodenbearbeitungsgerät umfahren werden.

Die Abstandsregelung zum virtuellen Hindernis, also einem jeweils gefundenen Nachbarort, kann dabei genauso erfolgen wie bei der Abstandregelung zum realen Hindernis, wie einer Wand.

Aufgrund der Navigation eines Bodenbearbeitungsgerätes anhand von realen und virtuellen Hindernissen wird die im Augenblick zu fahrende Bahn nicht durch anzufahrende Punkte gemäß einer Bahnvorgabe geplant und erzielt, sondern die Bahn ergibt sich situationsbedingt anhand der vorliegenden Hindernisse, an denen in einem festgelegten Abstand entlanggefahren wird. Die Erfindung sieht dabei bevorzugt vor, die Bodenbearbeitung entlang von realen Hindernissen zu starten.

Eine Ausführung kann hier bevorzugt vorsehen, dass bei einer Regelung relativ zu einem virtuellen Hindernis ein anderer, bevorzugt größerer Abstandswert als Sollwert in der Regelung vorgegeben wird im Vergleich zur Regelung bei realen Hindernissen, insbesondere um hierdurch zu berücksichtigen, dass ein Bodenbearbeitungsgerät wegen der schon erfolgten Bearbeitung des Bodens am virtuellen Hindernis (Nachbarort) in einem größeren Abstand vorbeifahren kann als dies an einem realen Hindernis der Fall wäre, an welches möglichst nahe heranzufahren ist.

Alternativ kann es vorgesehen sein, ermittelte Abstandswerte eines jeweiligen Wertepaares von Winkel und Abstandswert zwischen aktuellem Ort und einem durch Vergleich ermittelten Nachbarort durch einen Faktor zu skalieren, insbesondere so dass einem Bodenbearbeitungsgerät der Abstand kleiner erscheint als er tatsächlich ist. In diesem Fall kann immer auf denselben Abstandswert zwischen Gerät und Hindernis (betrachtet senkrecht zur Bahn des Gerätes) bei der Navigation geregelt werden, ohne zwischen realen und virtuellen Hindernissen unterscheiden zu müssen.

Es kann so erfindungsgemäß jeweils erzielt werden, dass sich ein jeweiliges Bodenbearbeitungsgerät in einem Abstand entlang solcher Orte weiterbewegt, deren Knoten/Umgebungsbilder in der topologischen Karte ausgehend von einem Knoten eines festgestellten Nachbarortes Verbindungen mit metrischen, bevorzugt odometrischen Informationen aufweisen.

Dies kann erzielt werden, da zu jedem dieser verbundenen Orte Nachbarschaftsbeziehungen im Sinne des zuvor genannten Vergleiches bestehen. Es kann so ein Bodenbearbeitungsgerät neben einer schon bearbeiteten Bahn z.B. parallel in einem geregelten Abstand entlangfahren, wobei dies wegen der vorteilhaften Wirkungen der Erfindung sowohl bei Bahnen erfolgen kann, die dasselbe Bodenbearbeitungsgerät schon gefahren ist, ebenso wie bei Bahnen von einem anderen Bodenbearbeitungsgerät.

Bei Teilnahme von mehreren gleichzeitig arbeitenden Bodenbearbeitungsgeräten ist es bevorzugt vorgesehen, dass die Umgebungsbilder aller Bodenbearbeitungsgeräte zur Erzeugung einer einzigen gemeinsamen topologischen Karte gespeichert werden in einer einzigen gemeinsamen Datenbank auf einer zentralen Datenverarbeitungsanlage und/oder in einer für jedes Bodenbearbeitungsgerät individuellen Datenbank auf dem jeweiligen Bodenbearbeitungsgerät, insbesondere wobei die Inhalte aller individuellen Datenbanken identisch sind oder jede individuelle Datenbank nur einen Teil der gemeinsamen Karte umfasst.

Die Erfindung kann hier vorsehen, dass die Umgebungsbildunterkante, bevorzugt Panoramabildunterkante eine solche Höhe aufweist, dass sich die mehreren Bodenbearbeitungsgeräte nicht selbst in den Umgebungsbildern erfassen.

Zur Vermeidung von Kollisionen der Bodenbearbeitungsgeräte untereinander kann hingegen eine gegenseitige sensorische, ggfs. gegenseitige visuelle Erfassung der Bodenbearbeitungsgeräte vorgesehen sein, insbesondere auch über die Kamera, mit welcher jeweils Umgebungsbilder erfasst werden.

In jeder dieser Ausführungen gibt es nur eine einzige rein topologische Karte, in welche alle teilnehmenden Bodenbearbeitungsgeräte Knoten einfügen und Umgebungsbilder zugeordnet werden und auch alle Bodenbearbeitungsgeräte die zur Navigation benötigten Daten aus dieser einen topologischen Karte beziehen.

Obgleich die Bodenbearbeitungsgeräte bei Ausbildung einer zentralen Datenbank nicht untereinander kommunizieren müssen, greifen alle auf dieselben Daten zu, so dass jedes Bodenbearbeitungsgerät hierdurch Kenntnis erhalten kann (durch Nachbarortermittlung) von Bereichen, wo es selbst oder ein anderes bereits war.

Eine Weiterbildung kann hier vorsehen, dass die Umgebungsbilder mittels einer drahtlosen Kommunikation von einem jeweiligen Bodenbearbeitungsgerät (von mehreren) zu der einzigen gemeinsamen Datenbank oder den jeweiligen individuellen Datenbanken kommuniziert werden, insbesondere jedes Bodenbearbeitungsgerät hierfür mit der zentralen Datenverarbeitungsanlage oder mit jedem anderen Bodenbearbeitungsgerät kommuniziert.

Der Vergleich eines aktuellen Umgebungsbildes eines jeden Bodenbearbeitungsgerätes erfolgt erfindungsgemäß mit allen in der gemeinsamen Datenbank gespeicherten Umgebungsbildern auf der zentralen Datenverarbeitungsanlage, wobei die Ermittlung der eingangs genannten Hindernisinformationen zu jedem gefundenen Nachbarort in bevorzugter Ausführung unter Einsatz von lokalem visuellen Homing erfolgt, bevorzugt zwischen dem aktuellen Ort und zu mehreren Nachbarorten, um mehrere Home-Vektoren zu ermitteln, aus denen sich die Winkelwerte zwischen den Orten ergeben, und um mit diesen und relativer Positionsinformation durch Triangulation auch Abstände zwischen den Orten zu bestimmen.

Die Erfindung kann vorsehen, dass ermittelte relative Positionsinformationen zwischen den Orten denjenigen Verbindungen zugeordnet werden, die zwischen den jeweiligen Knoten dieser Orte in der topologischen Karte bestehen, so dass bei einer erneuten Verwendung solcher Orte und Knoten unmittelbar auf die in den Verbindungen gespeicherten Werte zugegriffen werden kann, ohne dass diese Werte erneut berechnet werden müssen.

Bei Verwendung von mehreren Bodenbearbeitungsgeräten kann die Erfindung vorsehen, dass die Berechnungen und Zuordnungen von Werten (Abstand /Winkel) auf der zentralen Datenbank bzw. einer diese verwaltenden Datenverarbeitungsanlage erfolgt und die Werte an dasjenige Bodenbearbeitungsgerät zurückübermittelt werden, welches das aktuelle Panoramabild für den Vergleich lieferte, so dass dieses jeweilige Gerät die Wertepaare an seinen Navigationsalgorithmus übergeben kann.

Die Erfindung kann hingegen auch vorsehen, dass von jedem Bodenbearbeitungsgerät individuell selbst der Vergleich eines aktuellen Umgebungsbildes mit den in der jeweiligen individuellen Datenbank gespeicherten Umgebungsbildern vorgenommen wird und selbst die Hindernisinformationen ermittelt werden.

Unabhängig davon, ob das Verfahren mit nur einem oder mit mehreren Bodenbearbeitungsgeräten durchgeführt wird, kann es vorgesehen sein, dass der Vergleich eines neuen Umgebungsbildes mit allen anderen gespeicherten Umgebungsbildern zum Ermitteln von Nachbarorten in zwei Stufen erfolgt.

Dabei kann es vorgesehen sein, dass in einer ersten Stufe eine Gruppe von Umgebungsbildern ermittelt wird, die bei einem Vergleich mit dem neuen Umgebungsbild einem ersten Vergleichskriterium genügen --- z.B. wobei der Vergleich weniger streng ist und/oder schneller berechenbar ist gegenüber der zweiten Stufe ---und in einer zweiten Stufe aus der Gruppe der in der ersten Stufe ermittelten Umgebungsbilder solche Umgebungsbilder ermittelt werden, die beim Vergleich mit dem neuen Umgebungsbild einem zweiten Vergleichskriterium genügen, z.B. wobei der Vergleich strenger und aufwändiger zu berechnen ist gegenüber der ersten Stufe. Ein solches Vorgehen kann auch in mehr als zwei Stufen erfolgen.

Für den Vergleich in erster Stufe müssen nicht die gesamten Bilddaten eines jeweiligen Bildes herangezogen werden. Es kann vorgesehen sein, zu jedem Bild eine Bildsignatur zu erstellen, die den Bildinhalt repräsentiert, und die Signaturen der Bilder zu vergleichen.

Hierdurch kann der Vorteil erschlossen werden, dass in der ersten Stufe eine schnelle und grobe Vorauswahl von Nachbarorten erfolgt, die zu einer Gruppe zusammengefasst werden, und sodann erst eine genauere und zeitlich aufwändigere Prüfung auf ein Nachbarschaftsverhältnis nur innerhalb der vorausgewählten Gruppe erfolgt.

Eine beispielshafte Ausführung kann hier vorsehen, dass in der ersten Stufe beim aktuellen Umgebungsbild Gruppen von mehreren Bildzeilen zu jeweils einer Zeile gemittelt werden und nach einer Fouriertransformation jeder gemittelten Zeile ein Abstandsmaß von den Absolutbeträgen der Fourierkoeffizienten dieses aktuellen Umgebungsbildes und den korrespondierenden Absolutbeträgen der Fourierkoeffizienten gespeicherter Umgebungsbilder gebildet wird und aus den gespeicherten Bildern eine Gruppe von Umgebungsbildern selektiert wird, bei denen die gebildeten Abstandsmaße jeweils einen Schwellwert unterschreiten.

In diesem Fall bilden die Absolutbeträge der Fourierkoeffizienten die zuvor genannte Signatur.

Die Erfindung kann hier auch vorsehen, dass bereits bei der Eintragung von Knoten in die Karte und Zuordnung des Umgebungsbildes die später für den Vergleich heranzuziehende Signatur gespeichert wird. Für jeden Knoten und das zugeordnete Bild in der topologischen Karte besteht somit bereits anfänglich eine Signaturinformation, auf die jederzeit zugegriffen werden kann.

Auch hier wird unter einem Abstandsmaß ein Maß verstanden, das Bildunterschiede zwischen den Bildern repräsentiert und nicht einen räumlichen Abstand. Das Abstandsmaß kann z.B. ein euklidisches sein.

Das Verwerfen von Phaseninformationen und ledigliches Berücksichtigen von Absolutbeträgen der Fourierkoeffizienten hat den Vorteil, dass die hier zum Vergleich herangezogenen Bildinformationen rotationsinvariant sind und somit die zu vergleichenden Bilder nicht erst über einen Bildkompass rechnerisch ausgerichtet werden müssen.

Die Erfindung kann dann weiter vorsehen, dass in der zweiten Stufe ein Abstandsmaß (z.B. euklidisch) vom aktuellen Umgebungsbild zu jedem Umgebungsbild der in erster Stufe selektierten Gruppe gebildet wird, insbesondere wobei die Berechnung des Abstandsmaßes bei zwei Umgebungsbildern mehrfach unter Drehung eines der Umgebungsbilder in Azimuthrichtung um einen Winkelbetrag wiederholt wird und das Minimum aller Abstandsmaße als resultierendes Abstandsmaß gewählt wird, wobei die Umgebungsbilder zu solchen Orten als Nachbarort selektiert werden, deren Abstandsmaß einen Schwellwert unterschreitet.

Unabhängig davon, ob der Vergleich zwischen Umgebungsbildern zum Ermitteln von Nachbarorten mit dem hier genannten konkreten Verfahren erfolgt oder durch eine andere Art der Vergleichsdurchführung, sieht die Erfindung bevorzugt vor, nach der Ermittlung der Nachbarorte zu einem aktuellen Ort für jeden gefundenen Nachbarort die erfindungsgemäß benötigten Hindernisinformationen zu berechnen, also bevorzugt den Winkel und den Abstand, unter dem ein solcher Nachbarort vom aktuellen Ort aus durch das Bodenbearbeitungsgerät "gesehen" wird.

Die Winkelwerte können dabei durch ein Verfahren zum lokalen visuellen Homing zwischen jedem Paar von aktuellem Ort und ermittelten Nachbarort berechnet werden, da der Home-Vektor den Winkel repräsentiert.

Hier kann in bevorzugter Ausführungsvariante ein lokales visuelles Homing anhand von Warping-Methoden, z.B. Min-Warping durchgeführt werden. Dabei werden ausgehend von einem Umgebungsbild (Ausgangsbild, z.B. aktuelles Umgebungsbild) Bilder berechnet, die ein Bodenbearbeitungsgerät aufnehmen ("sehen") würde, wenn es sich bewegt hätte, wobei die berechneten Bilder verglichen werden mit dem Zielbild, z.B. Bild am Nachbarort; die Bilder müssen jedoch nicht unbedingt explizit berechnet werden. Der Vergleich kann erfolgen anhand der angenommenen Bewegungsparameter, wobei der Home-Vektor bestimmt wird aus denjenigen Bewegungsparametern, die die beste Übereinstimmung liefern zwischen dem berechneten Bild und dem Zielbild. Ein solches Min-Warping-Verfahren hat den Vorteil, dass ein Azimuth-Ausgleich bei den zu vergleichenden Umgebungsbildern mittels eines Bildkompasses nicht stattfinden muss.

Die metrischen Abstände zwischen dem aktuellen Ort und jedem Nachbarort können sodann durch Triangulation, insbesondere unter Einsatz von lokalem visuellem Homing, zwischen diesen Orten und aus der topologischen Karte hinzugezogenen weiteren Orten bzw. Knoten berechnet werden, insbesondere unter Einbeziehung von bereits in der Karte in Verbindungen der zugehörigen Knoten gespeicherten relativen metrischen Informationen.

Neue metrische Abstandsinformationen, die hierbei zwischen zwei Orten berechnet werden, können erfindungsgemäß in Verbindungen der zugehörigen Knoten in der Karte gespeichert werden.

Mit den so erhaltenen konkreten Wertepaaren von Winkel und Abstand für jedes Paar von aktuellem Ort und Nachbarort kann sodann die Navigation, d.h. die Ansteuerung der Antriebe der Räder eines jeweiligen Bodenbearbeitungsgerätes in Abhängigkeit von diesen Wertepaaren erfolgen, insbesondere unter Regelung des Abstandes zwischen der aktuell gefahrenen Bahn und einer durch die Nachbarorte identifizierten vorherigen Bahn.

Ein erfindungsgemäßes selbstfahrendes Bodenbearbeitungsgerät umfasst gemäß den vorherigen Ausführungen eine Vorrichtung zur Bearbeitung eines Bodens, insbesondere eine Staubsaugvorrichtung, sowie mittels einer Elektronik angesteuerte Antriebe, wobei ein solches Gerät weiterhin eingerichtet ist, insbesondere die Elektronik programmiert ist, ein Verfahren der vorbeschriebenen Art auszuführen.

Hierbei ist in der Elektronik bevorzugt ein Algorithmus in der Form eines durch einen Mikroprozessor abgearbeiteten Programmes implementiert, der die Antriebe der Räder des Gerätes in Abhängigkeit von Paaren von Abstandswerten und Winkelwerten ansteuert, welche die relative räumliche Beziehung zwischen dem Gerät und einem Hindernis repräsentieren. Dem Algorithmus bzw. diesen ausführenden Programmteil werden dabei alternativ oder sogar kumulativ Wertepaare von Abstand und Winkel zu realen Hindernissen (Gegenstände) und virtuellen Hindernissen übergeben, wobei letztere gebildet werden durch Orte, an denen ein Bodenbearbeitungsgerät bereits einmal war.

Das Gerät ist dabei eingerichtet, auf eine rein topologische Karte in einer Datenbank Zugriff zu nehmen, in der für jeden solchen Ort ein Knoten gebildet ist.

Das erfindungsgemäße Verfahren wird anhand der nachfolgenden Figuren näher beschrieben.

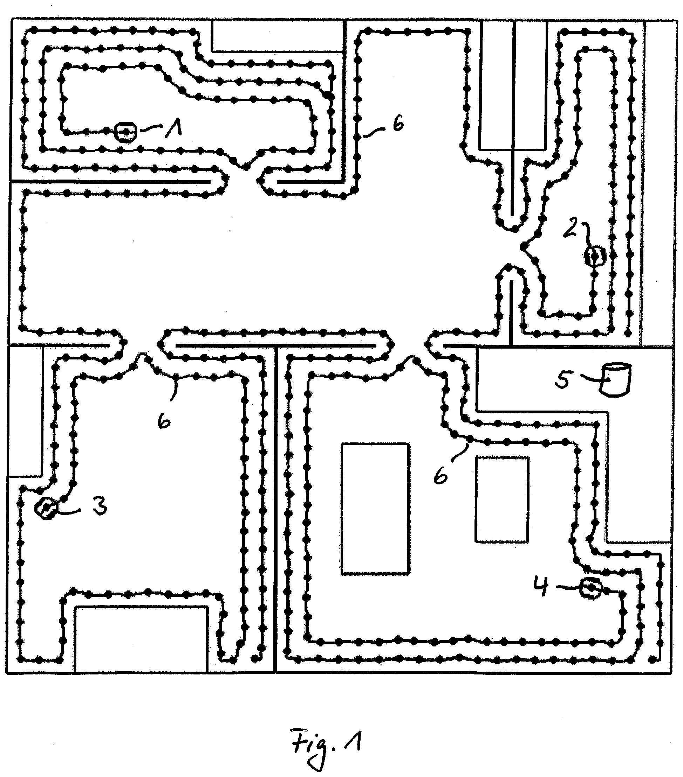

Die Figur 1 zeigt eine beispielshafte Wohnung mit mehreren Räumen, in der 4 Bodenbearbeitungsgeräte 1-4 gleichzeitig den Wohnungsboden bearbeiten, z.B. Staub saugen.

Alle Geräte 1-4 arbeiten mit demselben Navigationsverfahren und kommunizieren hier über Funk, z.B. WLAN, mit einer zentralen Datenbank 5, die auf einer Datenverarbeitungsanlage verwaltet wird und die eine topologische Karte mit Knoten zu allen Orten umfasst, an denen von jedem der Geräte 1-4 ein Panoramabild gemacht wurde. Diese Orte sind in der Figur 1 durch Punkte 6 gekennzeichnet. Die Punkte weisen hier grafisch dargestellte Verbindungen auf, um die Bahnen der Bewegung eines jeden Bodenbearbeitungsgerätes 1 bis 4 zu kennzeichnen.

Hier ist erkennbar, dass es keine Bahnüberschneidungen gibt, was an dem erfindungsgemäßen Verfahren liegt, gemäß dem für jedes Bodenbearbeitungsgerät 1-4 an seinem aktuellen Ort geprüft wird, ob es Nachbarorte gibt, an denen irgendeines der Bodenbearbeitungsgeräte bereits zuvor war. Solche Orte werden als Hindernis erkannt und durch den Navigationsalgorithmus umfahren, gemäß den Erläuterungen im allgemeinen Teil der Beschreibung.

Sofern ein Gerät nur noch von bereits befahrenen Bereichen, also virtuellen oder realen Hindernissen umgeben ist, sucht es noch freie unbearbeitete Bereiche, was durch eine Freiraumdetektion mittels der gespeicherten topologischen Karte erfolgen kann.

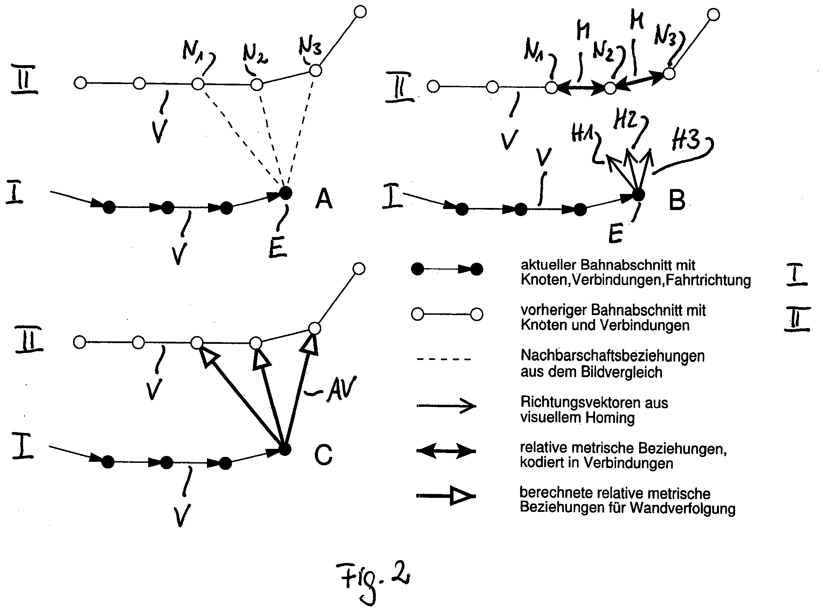

Die Figur 2 verdeutlicht die Vorgehensweise für jedes der Bodenbearbeitungsgeräte 1-4.

Hier sei angenommen, dass sich ein Gerät auf einem aktuellen Bahnabschnitt I befindet, der neben einem bereits befahrenen Bahnabschnitt II liegt. Die Punkte der Bahnabschnitte I und II repräsentieren Knoten in der topologischen Karte, denen Panoramabilder der zugehörigen Orte zugeordnet sind. Durchgezogene Verbindungen V zwischen Punkten eines jeweiligen Bahnabschnittes I oder II repräsentieren Verbindungen in der topologischen Karte, denen relative metrische Informationen aus Odometrie zugeordnet sind.

Gemäß Figurenteil A der Figur 2 wird am Ort des Knoten E der Bahn I durch Vergleich ermittelt, welche Knoten in der Karte zu Orten gehören, die nahe bei dem Ort des Knoten E liegen. Diese in Nachbarschaft stehenden Orte N1, N2, N3 bzw. Knoten sind durch gestrichelte Linien im Teil A der Figur 2 visualisiert.

Nach Feststellung dieser Orte N wird gemäß Figurenteil B durch lokales visuelles Homing der jeweilige Home-Vektor H1, H2, H3 zwischen aktuellem Ort E und Nachbarort N1, N2, N3 ermittelt. Diese Vektoren repräsentieren den Winkel, unter dem der Nachbarort N relativ zur Bewegungsrichtung vom aktuellen Ort E aus erscheint.

Zusammen mit metrischen Informationen M in den Verbindungen der Nachbarorte N1, N2, N3, die aus der Karte ausgelesen werden können, kann durch Triangulation der Abstandswert zwischen Ort E und jedem Nachbarort N errechnet werden.

Ein jeweiliger Abstandsvektor AV repräsentiert hiernach den Winkel und den Abstand zwischen Ort E und jedem Nachbarort N. Die Wertepaare von Abstandswert und Winkel jedes Nachbarortes bilden Eingangsparameter für den Navigationsalgorithmus des Gerätes, um in Abhängigkeit hiervon die Räder anzusteuern und um so den Abstand zwischen den Bahnen I und II auf einen gewünschten Sollwert zu regeln.

Hierdurch fährt das Gerät im Wesentlichen im konstanten Abstand, insbesondere quasi "parallel" zur Vorgängerbahn II eines anderen Gerätes. Der Navigationsalgorithmus interpretiert die Orte dieser Vorgängerbahn II als Hindernisse, an denen es entlang zu fahren gilt, gemäß der in dem Algorithmus hinterlegten Navigationsstrategie.

## Patentansprüche

1. Verfahren zur Navigation wenigstens eines selbstfahrenden Bodenbearbeitungsgerätes (1, 2, 3, 4), insbesondere wenigstens eines Staubsaugroboters (1, 2, 3, 4), bevorzugt einer Vielzahl von Bodenbearbeitungsgeräten (1, 2, 3, 4), wobei die Antriebe eines jeweiligen Bodenbearbeitungsgerätes (1, 2, 3, 4) angesteuert werden in Abhängigkeit von Hindernisinformationen von durch das jeweilige Bodenbearbeitungsgerät (1, 2, 3, 4) detektierten Hindernissen, insbesondere in Abhängigkeit von Werten für Abstand und Winkel zwischen dem jeweiligen Bodenbearbeitungsgerät (1, 2, 3, 4) und wenigstens einem Hindernis, wobei Hindernisse zumindest gebildet werden durch reale Objekte, insbesondere Wände, deren Hindernisinformationen durch Sensoren am jeweiligen Bodenbearbeitungsgerät (1, 2, 3, 4), insbesondere Laserscanner, erfasst werden und wobei ein jeweiliges Bodenbearbeitungsgerät (1, 2, 3, 4) in zeitlichen und/oder räumlichen Abständen an Orten (6) entlang der Bewegungsbahn mit einer mitgeführten Kamera Umgebungsbilder, insbesondere 360°-Panoramabilder erfasst, insbesondere anhand denen ein jeweiliges Bodenbearbeitungsgerät (1, 2, 3, 4) mittels visuellem Homing navigiert, **dadurch gekennzeichnet, dass**
a. in einer Datenbank (5) eine topologische Karte gebildet wird, in die von einem jeweiligen Bodenbearbeitungsgerät (1, 2, 3, 4) für jeden Ort (E, 6), an dem ein Umgebungsbild erfasst wird, ein Knoten eingefügt wird, dem zumindest das Umgebungsbild zugeordnet wird, und zwischen einem neu eingefügten Knoten und wenigstens einem in der Karte bestehenden, von demselben Bodenbearbeitungsgerät (1, 2, 3, 4) schon eingefügten Knoten Verbindungen (V) gebildet werden, denen relative metrische Informationen zugeordnet werden, insbesondere die durch odometrische Daten des jeweiligen Bodenbearbeitungsgerätes (1, 2, 3, 4) ermittelt werden, und
b. durch Vergleich des neuen Umgebungsbildes am aktuellen Ort (E), zu dem in die Karte ein neuer Knoten eingefügt wird, mit allen in der Datenbank schon zu Knoten zugeordneten Umgebungsbildern ermittelt wird, ob in einer begrenzten Umgebung des zum neuen Umgebungsbild gehörenden aktuellen Orts (E) sich wenigstens ein Nachbarort (N1, N2, N3) befindet, zu dem bereits ein Knoten und ein zugeordnetes Umgebungsbild in der Karte von demselben oder einem anderen Bodenbearbeitungsgerät (1, 2, 3, 4) gespeichert wurde und
c. bei Vorhandensein wenigstens eines solchen Nachbarortes (N1, N2, N3) ausgehend vom neu eingefügten Knoten zu dem zugehörigen Knoten jedes ermittelten Nachbarortes (N1, N2, N3) in der topologischen Karte eine neue Verbindung eingefügt wird und
d. zu wenigstens einem, bevorzugt allen Nachbarorten (N1, N2, N3) zu deren Knoten neue Verbindungen in die Karte eingefügt wurden, Hindernisinformationen, insbesondere mithilfe von visuellem Homing, relativ zum aktuellen Ort (E) des neuen Umgebungsbildes aus den in der Karte gespeicherten Daten berechnet und zur Steuerung oder Regelung der Antriebe des jeweiligen Bodenbearbeitungsgerätes (1, 2, 3, 4) herangezogen werden.

2. Verfahren nach Anspruch 1, **dadurch gekennzeichnet, dass** sich ein jeweiliges Bodenbearbeitungsgerät (1, 2, 3, 4) in einem Abstand entlang solcher Orte weiterbewegt, deren Knoten/Umgebungsbilder in der topologischen Karte ausgehend von einem Knoten eines festgestellten Nachbarortes (N1, N2, N3) Verbindungen (V) mit metrischen, bevorzugt odometrischen Informationen aufweisen.

3. Verfahren nach einem der vorherigen Ansprüche, **dadurch gekennzeichnet, dass** bei einer Vielzahl von gleichzeitig einen Boden bearbeitenden Bodenbearbeitungsgeräten (1, 2, 3, 4) die Umgebungsbilder aller Bodenbearbeitungsgeräte zur Erzeugung einer einzigen gemeinsamen topologischen Karte gespeichert werden in
a. einer einzigen gemeinsamen Datenbank (5) auf einer zentralen Datenverarbeitungsanlage und/oder
b. in einer für jedes Bodenbearbeitungsgerät individuellen Datenbank auf dem jeweiligen Bodenbearbeitungsgerät (1, 2, 3, 4) , insbesondere wobei die Inhalte aller individuellen Datenbanken identisch sind oder jede individuelle Datenbank nur einen Teil der gemeinsamen Karte umfasst.

4. Verfahren nach Anspruch 3, **dadurch gekennzeichnet, dass** die Umgebungsbilder mittels einer drahtlosen Kommunikation von einem jeweiligen Bodenbearbeitungsgerät (1, 2, 3, 4) zu der einzigen gemeinsamen Datenbank (5) oder den jeweiligen individuellen Datenbanken kommuniziert werden, insbesondere jedes Bodenbearbeitungsgerät (1, 2, 3, 4) hierfür mit der zentralen Datenverarbeitungsanlage oder mit jedem anderen Bodenbearbeitungsgerät (1, 2, 3, 4) kommuniziert.

5. Verfahren nach Anspruch 3 oder 4, **dadurch gekennzeichnet, dass** der Vergleich eines aktuellen Umgebungsbildes eines jeden Bodenbearbeitungsgerätes (1, 2, 3, 4) mit allen in der gemeinsamen Datenbank (5) gespeicherten Umgebungsbildern auf der zentralen Datenverarbeitungsanlage erfolgt und die insbesondere unter Anwendung von lokalem visuellem Homing ermittelten Hindernisinformationen bevorzugt zu mehreren Nachbarorten (N1, N2, N3) an dasjenige Bodenbearbeitungsgerät (1, 2, 3, 4) zurückübermittelt werden, welches das aktuelle Panoramabild für den Vergleich lieferte.

6. Verfahren nach Anspruch 3 oder 4, **dadurch gekennzeichnet, dass** von jedem Bodenbearbeitungsgerät (1, 2, 3, 4) individuell selbst der Vergleich eines aktuellen Umgebungsbildes mit den in der jeweiligen individuellen Datenbank gespeicherten Umgebungsbildern vorgenommen wird und selbst die Hindernisinformationen ermittelt werden.

7. Verfahren nach einem der vorherigen Ansprüche, **dadurch gekennzeichnet, dass** der Vergleich eines neuen Umgebungsbildes mit allen anderen gespeicherten Umgebungsbildern in zwei Stufen erfolgt, wobei in einer ersten Stufe eine Gruppe von Umgebungsbildern ermittelt wird, die bei einem Vergleich mit dem neuen Umgebungsbild einem ersten, insbesondere weniger strengen und schneller berechenbaren Vergleichskriterium genügen und in einer zweiten Stufe aus der Gruppe der in der ersten Stufe ermittelten Umgebungsbilder solche Umgebungsbilder ermittelt werden, die beim Vergleich mit dem neuen Umgebungsbild einem zweiten, insbesondere strengeren und aufwändiger zu berechnenden Vergleichskriterium genügen.

8. Verfahren nach Anspruch 7, **dadurch gekennzeichnet, dass** in der ersten Stufe beim aktuellen Panoramabild Gruppen von mehreren Bildzeilen zu jeweils einer Zeile gemittelt werden und nach einer Fouriertransformation jeder gemittelten Zeile ein Abstandsmaß von den Absolutbeträgen der Fourierkoeffizienten und den korrespondierenden Absolutbeträgen der Fourierkoeffizienten gespeicherter Umgebungsbilder gebildet wird und aus den gespeicherten Bildern eine Gruppe von Umgebungsbildern selektiert wird, bei denen die gebildeten Abstandsmaße jeweils einen Schwellwert unterschreiten.

9. Verfahren nach Anspruch 8, **dadurch gekennzeichnet, dass** in der zweiten Stufe ein Abstandsmaß vom aktuellen Umgebungsbild zu jedem Bild der selektierten Gruppe gebildet wird, insbesondere wobei die Berechnung des Abstandsmaßes bei zwei Umgebungsbildern mehrfach unter Drehung eines der Umgebungsbilder um einen Winkelbetrag in Azimuthrichtung wiederholt wird und das Minimum aller Abstandsmaße gewählt wird, wobei die Umgebungsbilder zu solchen Orten als Nachbarort (N1, N2, N3) selektiert werden, deren Abstandsmaß einen Schwellwert unterschreitet.

10. Verfahren zur Navigation mehrerer selbstfahrender Bodenbearbeitungsgeräte (1, 2, 3, 4), wobei jedes der Bodenbearbeitungsgeräte (1, 2, 3, 4) dasselbe Navigationsverfahren ausführt, welches ein Wandverfolgungsverfahren umfasst, wobei eine zu verfolgende Wand gebildet wird sowohl durch eine reale Wand als auch eine virtuelle Wand, die gebildet wird durch Knoten in einer von allen Bodenbearbeitungsgeräten (1, 2, 3, 4) gemeinsam aufgebauten topologischen Karte nach einem der vorherigen Ansprüche.

11. Selbstfahrendes Bodenbearbeitungsgerät (1, 2, 3, 4), umfassend eine Vorrichtung zur Bearbeitung eines Bodens, insbesondere umfassend eine Staubsaugvorrichtung, sowie mittels einer Elektronik angesteuerter Antriebe, **dadurch gekennzeichnet, dass** es eingerichtet ist, ein Verfahren nach einem der vorherigen Ansprüche auszuführen.

## Claims

1. Method for navigating at least one self-propelled floor treatment device (1, 2, 3, 4), in particular at least one vacuum cleaner robot (1, 2, 3, 4), preferably a multiplicity of floor treatment devices (1, 2, 3, 4), wherein the drives of a respective floor treatment device (1, 2, 3, 4) are actuated as a function of obstacle information about obstacles detected by the respective floor treatment device (1, 2, 3, 4), in particular as a function of values of the distance and angle between the respective floor treatment device (1, 2, 3, 4) and at least one obstacle, wherein obstacles are formed at least by real objects, in particular walls, whose obstacle information is acquired by sensors on the respective floor treatment device (1, 2, 3, 4), in particular laser scanners, and wherein a respective floor treatment device (1, 2, 3, 4) captures images of the surroundings, in particular 360° panoramic images, at time intervals and/or spatial intervals at locations (6) along the movement path with an on-board camera, in particular on the basis of which panoramic images a respective floor treatment device (1, 2, 3, 4) navigates by means of visual homing, **characterized in that**
a. in a database (5), a topographical map is formed, into which a respective floor treatment device (1, 2, 3, 4) inserts, for each location (E, 6) at which an image of the surroundings is captured, a node to which at least the image of the surroundings is assigned, and connections (V) are formed between a newly inserted node and at least one node which is already in the map and has already been inserted by the same floor treatment device (1, 2, 3, 4), to which connections (V) relative metric information is assigned, in particular which information is determined by odometric data of the respective floor treatment device (1, 2, 3, 4), and
b. by comparing the new image of the surroundings at the current location (E) at which a new node is inserted into the map with all the images of the surroundings which have already been assigned to nodes in the database, it is determined whether at least one adjacent location (N1, N2, N3), at which a node and an assigned image of the surroundings has already been stored in the map by the same or another floor treatment device (1, 2, 3, 4), is located in a delimited area surrounding the current location (E) which is associated with the new image of the surroundings, and
c. when at least one such adjacent location (N1, N2, N3) is present a new connection is inserted starting from the newly inserted node to the associated node of each determined adjacent location (N1, N2, N3) in the topological map, and
d. for at least one adjacent location (N1, N2, N3), preferably for all the adjacent locations (N1, N2, N3), to whose nodes new connections have been inserted into the map, obstacle information is calculated relative to the current location (E) of the new image of the surroundings, in particular using visual homing, from the data stored in the map, and said obstacle information is used to perform open-loop or closed-loop control of the drives of the respective floor treatment device (1, 2, 3, 4).

2. Method according to Claim 1, **characterized in that** a respective floor treatment device (1, 2, 3, 4) continues to move at a distance along such locations whose nodes/images of the surroundings in the topological map have, starting from a node of a detected adjacent location (N1, N2, N3), connections (V) with metric, preferably odometric, information.

3. Method according to one of the preceding claims, **characterized in that,** when there are a multiplicity of floor treatment devices (1, 2, 3, 4) which treat a floor simultaneously, in order to generate a single common topological map, the images of the surroundings of all the floor treatment devices are stored in
a. a single common database (5) in a central data processing system, and/or
b. in a database which is specific to each floor treatment device, in the respective floor treatment device (1, 2, 3, 4), in particular wherein the contents of all the individual databases are identical or each individual database comprises just one part of the common map.

4. Method according to Claim 3, **characterized in that** the images of the surroundings are communicated by means of a wireless communication from a respective floor treatment device (1, 2, 3, 4) to the single common database (5) or the respective individual databases, in particular each floor treatment device (1, 2, 3, 4) communicates for this purpose with the central data processing system or with every other floor treatment device (1, 2, 3, 4).

5. Method according to Claim 3 or 4, **characterized in that** the comparison of a current image of the surroundings of each floor treatment device (1, 2, 3, 4) with all the images of the surroundings which are stored in the common database (5) is carried out on the central data processing system, and the obstacle information, preferably relating to a plurality of adjacent locations (N1, N2, N3), determined in particular using local visual homing, is transmitted back to that floor treatment device (1, 2, 3, 4) which supplied the current panoramic image for the comparison.

6. Method according to Claim 3 or 4, **characterized in that** each floor treatment device (1, 2, 3, 4) itself individually carries out the comparison of a current image of the surroundings with the images of the surroundings stored in the respective individual database and determines the obstacle information itself.

7. Method according to one of the preceding claims, **characterized in that** the comparison of a new image of the surroundings with all the other stored images of the surroundings takes place in two stages, wherein in a first stage a group of images of the surroundings is determined, which images satisfy, during a comparison with the new image of the surroundings, a first comparison criterion which is, in particular, less strict and can be calculated more quickly, and in a second stage such images of the surroundings are determined from the group of images of the surroundings determined in the first stage, which images satisfy, during the comparison with the new image of the surroundings, a second comparison criterion which is, in particular, stricter and more complicated to calculate.

8. Method according to Claim 7, **characterized in that** in the first stage, in the case of the current panoramic image, groups of a plurality of image lines are averaged to form one line in each case and after a Fourier transformation of each averaged line a distance measure from the absolute values of the Fourier coefficients and the corresponding absolute values of the Fourier coefficients of stored images of the surroundings is formed, and a group of images of the surroundings in which the distance measures formed undershoot a threshold value in each case is selected from the stored images.

9. Method according to Claim 8, **characterized in that** in the second stage a distance measure from the current image of the surroundings to each image of the selected group is formed, in particular wherein the calculation of the distance measure is carried out repeatedly for two images of the surroundings, while rotating one of the images of the surroundings by an angle value in the azimuth direction, and the minimum of all the distance measures is selected, wherein the images of the surroundings for such locations as an adjacent location (N1, N2, N3) whose distance measure undershoots a threshold value are selected.

10. Method for navigating a plurality of self-propelled floor treatment devices (1, 2, 3, 4), wherein each of the floor treatment devices (1, 2, 3, 4) executes the same navigation method which comprises a wall-following method, wherein a wall which is to be followed is formed both by a real wall as well as by a virtual wall, which virtual wall is formed by nodes in a topological map which is constructed from all the floor treatment devices (1, 2, 3, 4) together, in particular according to one of the preceding claims.

11. Self-propelled floor treatment device (1, 2, 3, 4), comprising a device for treating a floor, in particular comprising a vacuum cleaner device as well as drives which are actuated by means of electronics, **characterized in that** said floor treatment device (1, 2, 3, 4) is configured to carry out a method according to one of the preceding claims.

## Revendications

1. Procédé de navigation d'au moins un dispositif de traitement de sol autopropulsé (1, 2, 3, 4), en particulier d'au moins un robot aspirateur (1, 2, 3, 4), de préférence d'une multitude de dispositifs de traitement de sol (1, 2, 3, 4), les entraînements d'un dispositif de traitement de sol respectif (1, 2, 3, 4) étant commandés en fonction d'informations d'obstacles provenant d'obstacles détectés par le dispositif de traitement de sol respectif (1, 2, 3, 4), en particulier en fonction de valeurs de distance et d'angle entre le dispositif de traitement de sol respectif (1, 2, 3, 4) et au moins un obstacle, les obstacles étant au moins formés par des objets réels, et en particulier des murs, dont les informations d'obstacles sont détectées par des capteurs situés au niveau du dispositif de traitement de sol respectif (1, 2, 3, 4), en particulier des scanners laser, et un dispositif de traitement de sol respectif (1, 2, 3, 4) capturant des images d'environnement, en particulier des images panoramiques à 360°, en particulier sur la base desquelles un dispositif de traitement de sol respectif (1, 2, 3, 4) navigue au moyen d'un repérage visuel, à des intervalles de temps et/ou d'espace et à des emplacements (6) le long de la trajectoire au moyen d'une caméra transportée, **caractérisé en ce que**
a. une carte topologique est formée dans une base de données (5), carte dans laquelle un dispositif de traitement de sol respectif (1, 2, 3, 4) insère, pour chaque emplacement (E, 6) où une image d'environnement est acquise, un nœud auquel au moins l'image d'environnement est associée, et forme des liaisons (V) entre un nœud nouvellement inséré et au moins un nœud présent dans la carte et déjà inséré par le même dispositif de traitement de sol (1, 2, 3, 4), liaisons auxquelles sont associées des informations métriques relatives, en particulier qui sont déterminées par des données odométriques du dispositif de traitement de sol respectif (1, 2, 3, 4), et
b. une comparaison entre la nouvelle image d'environnement à l'emplacement actuel (E), où un nouveau nœud est inséré dans la carte, et toutes les images d'environnement déjà associées à des nœuds dans la base de données permet de déterminer si au moins un emplacement voisin (N1, N2, N3), pour lequel un nœud et une image d'environnement associée ont déjà été mémorisés dans la carte du même ou d'un autre dispositif de traitement de sol (1, 2, 3, 4), se trouve dans un environnement limité de l'emplacement actuel (E) appartenant à la nouvelle image d'environnement et
c. en présence d'au moins un tel emplacement voisin (N1, N2, N3), une nouvelle liaison est insérée dans la carte topologique depuis le nœud nouvellement inséré jusqu'au nœud associé de chaque emplacement voisin déterminé (N1, N2, N3), et
d. pour au moins un emplacement voisin, de préférence tous les emplacements voisins (N1, N2, N3), pour les nœuds desquels de nouvelles liaisons ont été insérées dans la carte, des informations d'obstacles sont calculées, notamment à l'aide d'un repérage visuel, par rapport à l'emplacement actuel (E) de la nouvelle image d'environnement à partir des données mémorisées dans la carte, et sont utilisées pour commander ou réguler les entraînements du dispositif de traitement de sol respectif (1, 2, 3, 4).

2. Procédé selon la revendication 1, **caractérisé en ce qu'**un dispositif de traitement de sol respectif (1, 2, 3, 4) continue à se déplacer à distance le long des emplacements dont les nœuds/images d'environnement dans la carte topologique comportent, à partir d'un nœud d'un emplacement voisin déterminé (N1, N2, N3), des liaisons (V) ayant des informations métriques, de préférence odométriques.

3. Procédé selon l'une des revendications précédentes, **caractérisé en ce que**, dans le cas d'une multitude de dispositifs de traitement de sol (1, 2, 3, 4) traitant simultanément un sol, les images d'environnement de tous les dispositifs de traitement de sol sont mémorisées afin de générer une seule carte topologique commune
a. dans une seule base de données commune (5) d'un système central de traitement de données et/ou
b. dans une base de données, propre à chaque dispositif de traitement de sol, du dispositif de traitement de sol respectif (1, 2, 3, 4), en particulier les contenus de toutes les bases de données individuelles étant identiques ou chaque base de données individuelle ne comprenant qu'une partie de la carte commune.

4. Procédé selon la revendication 3, **caractérisé en ce que** les images d'environnement sont communiquées au moyen d'une communication sans fil par un dispositif de traitement de sol respectif (1, 2, 3, 4) à la base de données commune unique (5) ou aux bases de données individuelles respectives, en particulier chaque dispositif de traitement de sol (1, 2, 3, 4) communique pour cela avec le système central de traitement des données ou avec tout autre dispositif de traitement de sol (1, 2, 3, 4).

5. Procédé selon la revendication 3 ou 4, **caractérisé en ce que** la comparaison entre une image d'environnement actuelle de chaque dispositif de traitement de sol (1, 2, 3, 4) et toutes les images d'environnement mémorisées dans la base de données commune (5) est effectuée sur le système central de traitement des données et les informations d'obstacles déterminées à l'aide du repérage visuel local, de préférence pour plusieurs emplacements voisins (N1, N2, N3), peuvent être retransmises au dispositif de traitement de sol (1, 2, 3, 4) qui a fourni l'image panoramique actuelle pour la comparaison.

6. Procédé selon la revendication 3 ou 4, **caractérisé en ce que** chaque dispositif de traitement de sol (1, 2, 3, 4) effectue individuellement une comparaison entre une image d'environnement actuelle et les images d'environnement mémorisées dans la base de données individuelle respective et détermine même les informations d'obstacle.

7. Procédé selon l'une des revendications précédentes, **caractérisé en ce que** la comparaison entre une nouvelle image d'environnement et toutes les autres images d'environnement mémorisées est effectuée en deux étapes, un groupe d'images d'environnement, qui satisfont lors d'une comparaison avec la nouvelle image d'environnement à un premier critère de comparaison, en particulier moins strict et calculable plus rapidement, étant déterminé dans une première étape et des images d'environnement, qui satisfont lors de la comparaison avec la nouvelle image d'environnement à un deuxième critère de comparaison, notamment plus strict et plus complexe à calculer, étant déterminées dans une deuxième étape à partir du groupe d'images d'environnement déterminé dans la première étape.

8. Procédé selon la revendication 7, **caractérisé en ce que** dans la première étape dans l'image panoramique actuelle des groupes de plusieurs lignes d'image sont moyennés pour former à chaque fois une ligne et une mesure de distance par rapport aux valeurs absolues des coefficients de Fourier et aux valeurs absolues correspondantes des coefficients de Fourier d'images d'environnement mémorisées est formée après une transformation de Fourier de chaque ligne moyennée et un groupe d'images d'environnement, pour lesquelles les mesures de distance formées tombent au-dessous d'une valeur de seuil, est sélectionné à partir des images mémorisées.

9. Procédé selon la revendication 8, **caractérisé en ce que**, dans la deuxième étape, une mesure de distance de l'image d'environnement actuelle est formée pour chaque image du groupe sélectionné, notamment le calcul de la mesure de distance pour deux images d'environnement étant répété plusieurs fois par rotation de l'une des images d'environnement d'une valeur angulaire dans la direction azimutale, et le minimum de toutes les mesures de distance étant sélectionné, les images d'environnement étant sélectionnées comme emplacement voisin (N1, N2, N3) pour des emplacements dont la distance tombe au-dessous d'une valeur de seuil.

10. Procédé de navigation de plusieurs outils de traitement de sol autopropulsés (1, 2, 3, 4), chacun des dispositifs de traitement de sol (1, 2, 3, 4) mettant en œuvre le même procédé de navigation qui comprend un procédé de suivi de mur, un mur à suivre étant formé aussi bien par un mur réel que par un mur virtuel qui est formé par des nœuds dans une carte topologique construite conjointement par tous les dispositifs de traitement de sol (1, 2, 3, 4), en particulier selon l'une des revendications précédentes.

11. Dispositif de traitement de sol autopropulsé (1, 2, 3, 4) comprenant un dispositif de traitement de sol, comprenant notamment un aspirateur, et des entraînements commandés par une électronique, **caractérisé en ce qu'**il est adapté pour mettre en œuvre un procédé selon l'une des revendications précédentes.
